**Europäisches Patentamt**

**European Patent Office**

**Office européen des brevets**

(19)

(11) **EP 1 168 801 A2**

(12) **EUROPÄISCHE PATENTANMELDUNG**

(43) Veröffentlichungstag:
**02.01.2002 Patentblatt 2002/01**

(51) Int Cl.⁷: **H04M 9/08**

(21) Anmeldenummer: **01440109.5**

(22) Anmeldetag: **17.04.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **24.06.2000 DE 10030926**

(71) Anmelder: **ALCATEL**
**75008 Paris (FR)**

(72) Erfinder:
• **Walker, Michael**
**73666 Baltmannsweiler 2 (DE)**

• **Hartmann, Detlef**
**12623 Berlin (DE)**
• **Weinschenk, Fritz**
**73773 Aichwald (DE)**
• **Matt, Hans-Jürgen**
**71686 Remseck (DE)**

(74) Vertreter: **KOHLER SCHMID + PARTNER**
**Patentanwälte GbR, Ruppmannstrasse 27**
**70565 Stuttgart (DE)**

(54) **Störsignalabhängige adaptive Echounterdrückung**

(57)     Ein Verfahren zur Reduktion von Echosignalen bei Telekommunikations (=TK)-Systemen für die Übertragung von akustischen Nutzsignalen, insbesondere menschlicher Sprache, bei dem das Vorliegen von Echosignalen detektiert und/oder vorhergesagt wird und anschließend die detektierten bzw. vorhergesagten Echosignale unterdrückt oder reduziert werden, ist dadurch gekennzeichnet, dass der Leistungswert des Geräuschpegels N im aktuell benutzten TK-Kanal fortlaufend gemessen und/oder geschätzt wird, und dass in Abhängigkeit vom aktuellen Geräuschpegel N laufend der Grad der aktuell vorzunehmenden Reduktion der Echosignale nach einer vorgegebenen Funktion h(N) automatisch eingestellt wird. Damit kann unaufwendig und mit einfachsten Mitteln eine Reduktion der Echosignale in der Weise durchgeführt werden, dass ein für das menschliche Ohr möglichst angenehm klingender akustischer Gesamteindruck des ausgesendeten TK-Signals erzeugt wird, wobei gegenüber dem Stand der Technik der Nachteil vermieden wird, dass bei stärkerem, deutlich hörbarem Geräusch und gleichzeitig großer Echoabsenkung in das Hintergrundgeräusch aufgrund der Echounterdrückung bei auftretenden kurzzeitigen Echospitzen "Löcher" in das ansonsten gleichmäßige Hintergrundgeräusch "gestanzt" werden, was bei den bekannten Verfahren zu einer als unangenehm empfundenen Modulation des übertragenen TK-Signals in den Sprachpausen führt.

**Beschreibung**

Die Erfindung betrifft ein Verfahren zur Reduktion von Echosignalen bei Telekommunikations (=TK)-Systemen für die Übertragung von akustischen Nutzsignalen, insbesondere menschlicher Sprache, bei dem das Vorliegen von Echosignalen detektiert und/oder vorhergesagt wird und anschließend die detektierten bzw. vorhergesagten Echosignale unterdrückt oder reduziert werden.

Ein solches Verfahren ist beispielsweise bekannt aus der DE 42 29 912 A1.

Die Echo- und Geräuschunterdrückung gewinnt zunehmend an Bedeutung für die Sprachqualität in Nachrichtennetzwerken, bei denen eine Telefonübertragung durch Leitungsechos oder akustische Echos sowie durch Hintergrundgeräusche oft empfindlich gestört wird.

Schnurlose Telefone, insbesondere mobile Telefone finden immer größere Verbreitung. Um bei ständig kleineren Abmessungen der Geräte und damit zunehmender akustischer Kopplung vom Lautsprecher auf das Mikrofon eine vernünftige Qualität der Kommunikation zu erreichen, besitzen diese Geräte regelmäßig Einrichtungen zur Kompensation akustischer Echos. Die Technik der adaptiven Filter zur Echokompensation ist beispielsweise beschrieben in der DE 44 30 189 A1.

Bei älteren Mobiltelefonen oder technisch einfach aufgebauten billigeren neuen Handys jedoch werden immer noch erhebliche akustische Echos erzeugt, die in das PSTN (=Public Switched Telephone Network) gelangen und dort die Kommunikation mit anderen festen oder mobilen TK-Teilnehmern sehr erschweren. Die Mobilfunkbetreiber sind daher bestrebt, diese Echos zu eliminieren, um mit dem Argument einer besseren Tonqualität gegenüber Wettbewerbern neue Kunden zu werben.

Da in den billigen Mobiltelefonen die akustischen Echos entstehen, aber nicht vollständig unterdrückt werden, bleibt den Netzbetreibern in der Regel nichts anderes übrig, als zu versuchen, die Echos in der nächsten Vermittlungsstelle zu unterdrücken. Mit üblichen adaptiven Filtern wird ein Leitungsecho modelliert, das bei richtiger Einstellung des Filters die tatsächlich auftretenden Echos nachbildet. Sodann wird das modellierte Leitungsecho vom echobehafteten TK-Signal subtrahiert. Die Technik der adaptiven Filter kann jedoch bei Echos von Handys nicht erfolgreich eingesetzt werden, weil die originale Sprache in Richtung zum Handy sprachcodiert wird und das Echo im Handy nochmals einer Sprachcodierung unterworfen wird. Daher eignen sich für die Unterdrückung von akustischen Handy-Echos nur neuere, nicht lineare Verfahren wie beispielsweise "Center Clipper", gesteuerte Dämpfungsglieder oder NLP. Für akustische Echos von festen Telefonen sind adaptive Filter geeignet, aber in der Regel relativ aufwendig.

Mit der Einführung von Echo- und Geräuschreduktionsverfahren wurde die Stärke der Beeinflussung von Sprachsignalen in den Verfahren zunächst nicht berücksichtigt. Zum Beispiel wurde eine Spektralsubtraktion mit größtmöglichem Gewinn betrieben bzw. der Grad einer Echo- und Geräuschreduktion wurde auf möglichst hohe Werte eingestellt, um bei einem vernünftigen mittleren Störabstand einen möglichst guten Höreindruck zu erzeugen. Alle diese Verfahren erzeugen aber deutlich hörbare Störungen bei schlechtem Signal-Störabstand oder bei schwachen Nutzsignalen.

Besonders nachteilig erweist es sich bei den bekannten Verfahren, dass bei stärkerem, deutlich hörbarem Geräusch und gleichzeitig großer Echoabsenkung in das Hintergrundgeräusch aufgrund der Echounterdrückung bei auftretenden kurzzeitigen Echospitzen "Löcher" in das ansonsten gleichmäßige Hintergrundgeräusch "gestanzt" werden, was zu einer als unangenehm empfundenen Modulation des übertragenen TK-Signals in den Sprachpausen führt.

Aufgabe der vorliegenden Erfindung ist es demgegenüber, ein Verfahren mit den eingangs beschriebenen Merkmalen vorzustellen, bei dem möglichst unaufwendig und mit einfachsten Mitteln eine Reduktion der Echosignale in der Weise durchgeführt werden kann, dass ein für das menschliche Ohr möglichst angenehm klingender akustischer Gesamteindruck des ausgesendeten TK-Signals erzeugt wird.

Erfindungsgemäß wird diese Aufgabe auf ebenso einfache wie wirkungsvolle Art und Weise dadurch gelöst, dass der Leistungswert des Geräuschpegels N im aktuell benutzten TK-Kanal fortlaufend gemessen und/oder geschätzt wird, und dass in Abhängigkeit vom aktuellen Geräuschpegel N laufend der Grad der aktuell vorzunehmenden Reduktion der Echosignale nach einer vorgegebenen Funktion h(N) automatisch eingestellt wird.

Damit wird der Grad einer Echoabsenkung bzw. Echounterdrückung vom aktuell auftretenden Leistungswert N des Geräusches automatisch mitgesteuert und dem aktuellen Geräuschwert im Telefonkanal angepasst und in vorbestimmter definierter Weise nachgeführt. Über die Wahl der Funktion h(N) kann auch der subjektive Eindruck des erzeugten Gesamtsignals angepasst werden. Ein Auftreten von "Löchern" im Hintergrundgeräusch aufgrund einer zu starken Echounterdrückung wird durch das erfindungsgemäße Verfahren wirkungsvoll vermieden.

Vorteilhaft wird mit dem erfindungsgemäßen Verfahren das eingangsseitige Geräuschsignal N multiplikativ mit dem Faktor h(N) auf einen Wert $N_A$ reduziert gemäß der Gleichung

$$N_A = N * h(N) \ .$$

Eine bevorzugte Ausführungsform des erfindungsgemäßen Verfahrens zeichnet sich dadurch aus, dass, die Funktion h(N) mit zunehmendem N ansteigt, wobei

$$h(N << 0\ dB_m) = h_{min} = const.\ und\ h(N \approx 0\ dB_m) = h_{max} > h_{min}.$$

Einen psychoakustisch besonders günstigen Höreindruck der TK-Signale nach Durchführung der erfindungsgemäßen Echoreduktion erreicht man, wenn

$$-50dB < h_{min} < -20dB,\ vorzugsweise\ -45dB \leq h_{min} \leq -35dB$$

und

$$-20dB < h_{max} < 0\ dB,\ vorzugsweise\ -12dB \leq h_{max} \leq -6dB.$$

Besonders bevorzugt ist eine Variante des erfindungsgemäßen Verfahrens, die sich dadurch auszeichnet, dass die vorgegebene Funktion h(N) eine Funktion k(S/N) ist, die vom Rauschabstand, also dem Quotienten S/N aus dem Leistungswert des Signalpegels S der zu übertragenden Nutzsignale und dem Leistungswert des Geräuschpegels N abhängt, oder dass die vorgegebene Funktion h(N) eine Funktion k'(N/S) ist, die vom Kehrwert N/S dieses Quotienten, vorzugsweise von N/(N+S) abhängt.

Aus Gründen einer einfacheren praktischen Realisierung kann man auch eine Funktion von (S+N)/N oder von (S+N)/S verwenden. Besonders praktisch für eine Realisierung des Verfahrens auf einem digitalen Signalprozessor (=DSP) ist die Anwendung der Funktion k'[N/(N+S)], die zwischen 0 und 1 verläuft.

Ein Vorteil der obigen Verfahrensvariante besteht darin, dass bei stark variierendem Nutzsignalpegel S in den Telefonkanälen eines Bündels immer die richtige Einstellung für die Echoabsenkung gefunden wird. Bei einer Steuerung der Echoreduktion proportional zum Kehrwert N/S bzw. N/(N+S) lässt sich die Funktion k' leicht auf einem DSP mit festen Computerwortlängen von beispielsweise 16 bit unter Verwendung von besonders einfacher Software implementieren, da für N/S bzw. N/(N+S) vorzugsweise ein Zahlenbereich 0 < N/S bzw. N/(N+S) < 1 zur Steuerung der Geräuschreduktion relevant bzw. interessant ist.

Während einer natürlichen Kommunikation zwischen Menschen passt man in der Regel die Amplitude der gesprochenen Sprache automatisch an die akustische Umgebung an. Bei einer Sprachkommunikation zwischen entfernten Orten jedoch befinden sich die Gesprächspartner nicht im selben akustischen Umfeld und sind sich daher jeweils nicht der akustischen Situation am Ort des anderen Gesprächspartners bewusst. Besonders verschärft tritt daher ein Problem auf, wenn einer der Partner aufgrund seiner akustischen Umgebung gezwungen ist, sehr laut zu sprechen, während der andere Partner in einer leisen akustischen Umgebung Sprachsignale mit geringer Amplitude erzeugt.

Hinzu kommt das Problem, dass auf einem TK-Kanal auch ein "elektronisch erzeugtes" Geräusch entsteht und als Hintergrund zum Nutzsignal mitübertragen wird. Des weiteren ist es auch vorteilhaft, Störsignale wie unerwünschten Hintergrundlärm (Straßenlärm, Fabriklärm, Bürolärm, Kantinenlärm, Fluglärm etc.) zu reduzieren oder zu unterdrücken. Um den Komfort beim Telefonieren zu erhöhen, ist man generell bestrebt, jede Art von Geräusch möglichst gering zu halten.

Vorzugsweise werden daher zusätzlich zur Erkennung und erfindungsgemäßen Reduktion von Echosignalen auch Geräuschsignale im TK-Kanal unterdrückt oder reduziert. So kann man vorteilhaft eine gehörrichtige Geräuschabsenkung mit einer unabhängig davon arbeitenden Echoreduktion verbinden.

Bei dem bekannten Kompander-Verfahren, wie es beispielsweise in der eingangs zitierten DE 42 29 912 A1 beschrieben ist, wird der Grad der Geräuschabsenkung gemäß einer fest vorgegebenen Transferfunktion festgelegt.

Der Kompander hat zunächst die Eigenschaft, Sprachsignale mit einem bestimmten (vorab eingestellten) "normalen Sprachsignalpegel" (ggf. normale Lautstärke genannt) praktisch unverändert von seinem Eingang zum Ausgang zu übertragen.

Wird nun aber das Eingangssignal einmal zu laut, z.B. weil ein Sprecher zu dicht an sein Mikrofon kommt, so begrenzt ein Dynamik-Kompressor den Ausgangspegel auf nahezu den gleichen Wert wie im Normalfall, indem die aktuelle Verstärkung im Kompander mit zunehmender Eingangslautstärke linear abgesenkt wird. Durch diese Eigenschaft bleibt die Sprache am Ausgang des Kompandersystems etwa gleich laut - unabhängig davon wie stark die Eingangslautstärke schwankt.

Wird nun andererseits ein Signal mit einem Pegel, der kleiner als der Normalpegel ist, auf den Eingang des Kompanders gegeben, so wird das Signal zusätzlich gedämpft, indem die Verstärkung zurückgeregelt wird, um Hintergrundgeräusche möglichst nur abgeschwächt zu übertragen. Der Kompander besteht somit aus zwei Teilfunktionen, einem Kompressor für Sprachsignalpegel, die größer oder gleich einem Normalpegel sind und einem Expander für Signalpegel, die kleiner als der Normalpegel sind.

Besonders bevorzugt ist eine Variante der obigen Ausführungsform des erfindungsgemäßen Verfahrens, bei der in Abhängigkeit vom aktuellen Geräuschpegel N laufend der Grad der aktuell vorzunehmenden Reduktion des Geräuschpegels N nach einer vorgegebenen Funktion f(N) oder g(S/N) oder g'(N/S), vorzugsweise g'(N/[N+S]) automatisch eingestellt wird. Damit wird der Grad der Geräuschabsenkung angepasst an die jeweilige Situation ermittelt und zur Steuerung einer Geräuschunterdrückung verwendet. Dies ermöglicht mit einfachen Mitteln, einen für das menschliche Ohr möglichst angenehmen akustischen Gesamteindruck zu erzeugen, der je nach Geschmack an individuelle Bedürfnisse angepasst werden kann.

Ein weiterer Vorteil dieser besonders bevorzugten Verfahrensvariante besteht darin, dass bei einem Bündel von Telefonkanälen, beispielsweise zwischen internationalen Vermittlungsstellen, die Geräuschsituation in jedem einzelnen Kanal, die ja von Kanal zu Kanal sehr verschieden sein kann, automatisch eingestellt und individuell optimiert werden kann.

Besonders gute Ergebnisse werden mit dieser Verfahrensvariante einer Geräuschreduktion erzielt, wenn die Funktionen f(N), g(S/N), g'(N/S) oder g'([N/N+S]) bei N << 0 $dB_m$ jeweils mit einem konstanten Maximalwert $f_{max}$ bzw. $g_{max}$ bzw. $g'_{max} \approx 1$ (entsprechend 0 dB) beginnen, im Bereich zwischen N = -15 $dB_m$ bis -10 $dB_m$, vorzugsweise bei N bzw. S/N $\approx$ -12 $dB_m$, auf einen Minimalwert $f_{min}$ bzw. $g_{min}$ bzw. $g'_{min}$ abfallen und anschließend bis N $\approx$ 0 $dB_m$ auf konstanten Wert $f_0 > f_{min}$ bzw. $g_0 > g_{min}$ bzw. $g'_0 > g'_{min}$ ansteigen, wobei $f_0, g_0, g'_0 < 1$ (entsprechend 0 dB), vorzugsweise 0,35 < $f_0, g_0, g'_0$ < 0,75 (was einem Intervall -12 dB < $f_0, g_0, g'_0$ < -3 dB entspricht).

Akustische Gehörtests haben ergeben, dass bei S/N = 0 dB die Sprache bereits so stark gestört ist, dass man das Geräusch nur bedingt um einen Wert $f_0$ bzw. $g_0$ zwischen -5 und -10 dB, vorzugsweise zwischen -6 und -8 dB reduzieren darf, um den akustischen Gesamteindruck im Hinblick auf eine Natürlichkeit der Sprache nicht zu verschlechtern. Bei noch ungünstigeren Werten des Signal-zu-Rausch-Verhältnisses S/N < 0 dB kann dann der Wert $f_0$ bzw. $g_0$ beibehalten werden, da jede weitere Geräuschabsenkung den Gesamteindruck nur verschlechtert.

Bei mittleren S/N kann gemäß diesen Untersuchungen eine stärkere Geräuschabsenkung vorgenommen werden. Ein Minimum ergibt sich dabei im Bereich 10 dB bis 15 dB. Der Wert der Geräuschabsenkung $f_{min}$ bzw. $g_{min}$ kann zwischen -3 dB und -30 dB einstellbar sein und sollte im Maximum zwischen -12 dB und -30 dB, vorzugsweise etwa -18 dB betragen.

Bei sehr guten Signal-zu-Geräuschabständen S/N > 40 dB sollte nur noch eine minimale Absenkung zwischen 0 und -3 dB eingestellt werden, um die Natürlichkeit der übertragenen Sprache so gut wie möglich zu erhalten. Nach der ITU-T G.168 für Echo-Canceller soll ein Rauschen bei S/N > 40 dB unverändert belassen werden, was einem numerischen Wert $f_{max}$ bzw. $g_{max}$=1 (entsprechend 0 dB) entspricht.

Der Klang der Sprache und die Verständlichkeit sind besonders gut, wenn die Funktionen h(N), f(N), k(S/N), g(S/N) bzw. k'(N/S) und g'(N/S) über die drei oben diskutierten Bereiche hinweg in stetiger Weise miteinander zusammenhängen, wobei schnelle Änderungen in N oder in S/N vorteilhaft durch Filterungen geglättet werden können.

Eine relativ einfache Realisierung in Hardware und/oder Software ergibt sich, indem man die genannten Funktionen h(N), f(N), k(S/N), g(S/N) bzw. k'(N/S) und g'(N/S) durch gerade Kennlinienstücke zwischen den drei oben beschriebenen Betriebspunkten approximiert (abschnittsweise lineare Näherung).

Bei einer etwas aufwendigeren Variante des erfindungsgemäßen Verfahrens, die aber im Ergebnis zu einem besseren Klangbild führt, wird eine Polynomfunktion zur Implementierung der stetigen Funktionen h(N), f(N), k(S/N), g(S/N) bzw. k'(N/S) und g'(N/S) in den drei diskutierten Bereichen herangezogen, was im Ergebnis zu einer Art unsymmetrischer Glockenfunktion führt.

Für einen günstigen Kompromiss zwischen Aufwand und Klangbild kann man bestimmte Abschnitte der oben genannten Funktionen durch gerade Kennlinienstücke und andere Abschnitte durch eine Polynomialfunktion realisieren.

Besonders bevorzugt ist eine Variante des erfindungsgemäßen Verfahrens, bei der die Funktionen h(N), f(N), k(S/N), g(S/N) bzw. k'(N/S) und g'(N/S) so gewählt werden, dass die Reduktion des Geräuschpegels N gehörrichtig gemäß den psychoakustischen Mittelwerten des menschlichen Gehörspektrums erfolgt. Dabei wird der Wert für S und/ oder N nicht nur aus dem momentanen Leistungswert alleine, sondern auch aus einem gewichteten spektralen Verlauf von S bzw. N bestimmt und insgesamt über die so gewonnene Funktion eine gehörrichtige, d.h. eine psychoakustisch angenehm klingende Geräuschreduktion erzielt. Da es kein einfach darstellbares Maß für eine akustisch angenehm klingende Geräuschreduktion gibt, sind alle Qualitätsbeurteilungen auf umfangreiche Gehörtests angewiesen, die anschließend mittels dafür optimierter statistischer Methoden ausgewertet werden, um einen Bewertungsmaßstab, (ähnlich wie bei Sprachcodes) zu erhalten.

Eine gute Geräuschpegel-Schätzung erfordert einen guten Sprach-Pausen-Detektor, da man nur dann sicher sein kann, dass in den Sprachpausen-Abschnitten lediglich störendes Geräusch und nicht irgendeine Mischung zwischen Geräusch und Sprachfetzen vorliegt, wie es in der Praxis häufig vorkommt.

Um eine effektive Geräuschreduktion zu erzielen, wird vorzugsweise das zu übertragende Signal während der Sprachpausen in seinem Leistungswert gemäß einer Exponentialfunktion abgesenkt. Damit wird bereits eine wesentliche Geräuschminderung erzielt. Während der Sprachabschnitte werden Geräusche zumindest teilweise durch die Sprache selbst maskiert und daher insgesamt weniger wahrgenommen. Hinzu kommt, dass eine Absenkung der Geräusche während einer Sprachpause das Gehör deutlich weniger belastet, indem es den Taubheitseffekt nach lauter Schalleinwirkung wesentlich mindert. Das Ohr kann bei Wiedereinsetzen der Sprache empfindlicher reagieren und genauer hinhören.

Besonders bevorzugt ist auch eine Verfahrensvariante, die sich dadurch auszeichnet, dass im Sprach-Pausen-Detektor aus dem Eingangssignal x mittels eines Kurzzeit-Pegelschätzers ein Kurzzeit-Ausgangssignal sam(x), mittels eines Mittelzeit-Pegelschätzers ein Mittelzeit-Ausgangssignal mam(x) und mittels eines Langzeit-Pegelschätzers ein Langzeit-Ausgangssignal lam(x) gebildet wird, dass die drei Ausgangssignale sam(x), mam(x) und lam(x) über geeignete Verstärkungskoeffizienten so eingestellt werden, dass sie etwa gleich groß, wenn das Eingangssignal x ein reines Rauschsignal ist, wobei sam(x) < mam(x) < lam(x), dass die drei Ausgangssignale sam(x), mam(x) und lam(x) von Komparatoren überwacht werden, und dass das Vorliegen eines Sprachsignals als Eingangssignal x angenommen wird, wenn sam(x) und mam(x) zunächst jeweils größer werden als lam(x), und das Vorliegen einer Sprachpause, wenn danach sam(x) und/oder mam(x) wieder kleiner wird als lam(x).

Mit Hilfe dieser relativ einfachen Arten der Bildung von verschiedenen Mittelwerten des Zeitsignals kann bereits eine überraschend gute Sprachpausen-Detektion durchgeführt werden, die nur einen sehr geringen Rechenaufwand erfordert.

Eine Weiterbildung dieser Verfahrensvariante sieht vor, dass die drei Ausgangssignale sam(x), mam(x) und lam(x) zur Sprach-Pausen-Abschätzung einem neuronalen Netz zugeführt werden, das mit einer Vielzahl von Szenarien mit unterschiedlichen Eingangssignalen x trainiert wurde. Ein neuronales Netz kann vorteilhaft lineare und nichtlineare Zusammenhänge zwischen einer großen Menge von Eingabeparametern und den gewünschten Ausgabewerten abbilden. Eine Voraussetzung dafür ist, dass das neuronale Netz einmal mit einer hinreichenden Menge von Eingabewerten und zugehörigen Ausgabewerten trainiert wurde. Daher eignen sich neuronale Netze besonders für die Aufgabe einer Sprachpausen-Detektion bei Anwesenheit von unterschiedlichen störenden Geräuschen.

Eine Trennung der Steuerung einer Geräuschreduktion von der einer Echoabsenkung ist zweckmäßig, da Geräusche und Echos unabhängig voneinander auftreten und auch in der Regel völlig unterschiedliche physikalische Ursachen haben. Man kann aber mathematisch eine generelle Reduktionsfunktion R angeben, die eine Absenkung von Signalpegeln sowohl für Geräusche als auch für Echos beschreibt:

$$R(S, N, ES, \tau_E, ERL, thrs) \sim g(S/N) \cdot d(N, ES, \tau_E, ERL, thrs),$$

wobei g(S/N) die oben beschriebene Geräuschreduktion und d(...) die unabhängig zusätzlich einsetzende geräuschabhängige Echoabsenkung bedeuten, wenn das geschätzte Echosignal den vorgegebenen Schwellwert thrs überschreitet.

Besonders vorteilhaft ist eine Verfahrensvariante, bei der während der Zeitdauer einer Echo-Reduktion zum Nutzsignal zusätzlich ein künstliches Geräuschsignal addiert wird. Eine Geräuschabsenkung ist bei gleichbleibendem Geräuschpegel ebenfalls konstant. Eine plötzlich zusätzlich einsetzende Echoreduktion im Rhythmus der Sprache bedeutet auch eine Geräuschabsenkung (zumindest in dem kurzen Zeitabschnitt) im Sprachrhythmus. Dies führt zu einem gepulsten Hintergrundgeräusch, welches sich nicht natürlich anhört. Daher ist es vorteilhaft, in den Augenblicken einer zusätzlichen Echoreduktion ein synthetisches Geräusch eines geeigneten Rauschgenerators in der Größenordnung des normalen Hintergrundgeräusches zum bearbeiteten Signal hinzuzufügen. Damit soll ein möglichst gleichbleibendes Hintergrundgeräusch für den Hörer vermittelt werden. Die oben diskutierten "Löcher" im Hintergrundgeräusch aufgrund der Echoabsenkung können damit zumindest teilweise "aufgefüllt" werden.

Der Rauschgenerator kann so gestaltet werden, dass das künstliche Geräuschsignal eine psychoakustisch als angenehm empfundene akustische Signalsequenz (=comfort noise) umfasst.

Anstelle eines synthetischen Hintergrundgeräusches kann aber auch ein Abschnitt eines zuvor aufgezeichneten echten Hintergrundgeräusches in passender Stärke in den Echozeitabschnitten eingefügt werden. Das hinzugefügte Geräusch unterscheidet sich dann so gut wie überhaupt nicht vom vorherigen Geräusch und wird daher kaum störende akustische Veränderungen beim Hörer hervorrufen. Lediglich an den Umschaltstellen zwischen Originalgeräusch und hinzugefügtem Geräusch kann es ganz kurz zu Unstimmigkeiten kommen.

Das Hinzufügen von Geräuschen zur akustischen Verdeckung von Effekten sowie die Maßnahmen einer getrennten Behandlung von Geräuschen und Echos werden, wenn sie richtig aufeinander abgestimmt sind, einen besonders verständlichen und angenehmen Spracheindruck auch bei "schwieriger" Umgebung (Echos plus Geräusche) bewirken.

In den Rahmen der vorliegenden Erfindung fällt auch eine Servereinheit zur Unterstützung des oben beschriebenen erfindungsgemäßen Verfahrens sowie ein Computerprogramm zur Durchführung des Verfahrens. Das Verfahren kann sowohl als Hardwareschaltung, als auch in Form eines Computerprogramms realisiert werden. Heutzutage wird eine Software-Programmierung für leistungsstarke DSP's bevorzugt, da neue Erkenntnisse und Zusatzfunktionen leichter durch eine Veränderung der Software auf bestehender Hardwarebasis implementierbar sind. Verfahren können aber auch als Hardwarebausteine beispielsweise in TK-Endgeräten oder Telefonanlagen implementiert werden.

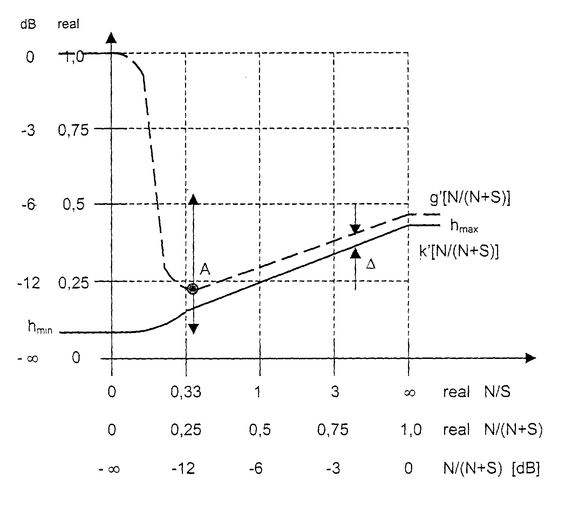

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert.

Die Figur zeigt ein konkretes Ausführungsbeispiel für die Funktionen k'[N/(N+S)] und g'[N/[N+S)].

### Beispiel: Berechnung eines Paares g'(.) und k'(.)

i) Die gewünschte Funktion g'(.)=NLA(.) zur Geräuschabsenkung kann z.B. durch Kombination von Geradenstücken mit Stücken einer Polynomfunktion beschrieben werden; im einfachsten Fall z.B. mittels eines Polynoms n-ten Grades (2<n<5) und einer Geraden. Der Geräuschreduktionsfaktor NLA (als Verstärkungswert) ergibt sich somit gemäß Gleichung (1):

$$(1) \quad g'(.) = \begin{cases} falls \ (x= N/(N+S) \leq -40 \ dB) & dann \ g'(.) = 1 \\ falls \ (-40dB < x=N/(N+S) \leq -12 \ dB) & dann \\ \quad g'(.) = a_n \ x^n + a_{n-1} \ x^{n-1} +.. +a_1 \ x + a_0 \quad (Polynomstück) \\ falls \ (-12 \ dB < x= N/(N+S) \leq 0 \ dB) & dann \\ \quad g'(.) = m \ x + c & (Gerade) \end{cases}$$

Die Koeffizienten {$a_n$, $a_{n-1}$, ...$a_1$, $a_0$} des Polynoms sowie die Koeffizienten {m, c} der Geraden werden so berechnet, dass sie im gewünschten Punkt A zusammentreffen.

ii) Die zugehörige Funktion der Echodämpfung ERLE[N/(N+S)] = k'(.) kann ebenfalls z.B. durch Kombination von Geradenstücken mit Stücken einer Polynomfunktion beschrieben werden. Sie wird in diesem Beispiel gemäß Gleichung (2) vorzugsweise aus 2 Geradenstücken zusammengesetzt, die so gewählt sind, dass sie an die jeweilige Situation gut angepasst sind.

$$(2) \quad k'(.) = \begin{cases} falls \ (x=N/(N+S) \leq -12 \ dB) & dann \\ \quad k'(.) = x \left( \dfrac{g'(A) \bullet \Delta - h_{min}}{0,25} \right) + h_{min} \quad (Geradenstück \ 1) \\ falls \ (-12 \ dB < x=N/(N+S) \leq 0 \ dB) & dann \\ \quad k'(.) = g'(x) \ \Delta & (Geradenstück \ 2) \end{cases}$$

Dabei bedeuten g'(A) der numerische Wert (real) von g'(.) im Punkt "A", $\Delta$ ein Faktor, um den dieser Wert verkleinert wird, damit die Funktion k'(.) parallel im Abstand von $\Delta$ zu der Funktion g'(.) verläuft.

Nach der Rec. ITU-T G.168 soll ein Geräusch bis zu einem Pegel von -40 dB am Eingang eines Echocancellers unverändert, d.h. mit gleichem Pegel, übertragen werden. Diese Funktionalität wird durch die erste Bedingung für g'(.) gemäß Gl.(1) erfüllt.

Besonders vorteilhaft ist es, wenn in die Lage des Punktes A, die Größe von $h_{min}$ sowie der Abstand $\Delta$ der

beiden Funktionen g' und k' voneinander frei wählbar und entsprechend den konkreten Bedürfnissen im Einzelfall einstellbar sind. Bei Verschiebung des Punktes A sollte sich die Funktion k' automatisch an die veränderte Funktion g' anpassen.

**Patentansprüche**

1. Verfahren zur Reduktion von Echosignalen bei Telekommunikations (=TK)-Systemen für die Übertragung von akustischen Nutzsignalen, insbesondere menschlicher Sprache, bei dem das Vorliegen von Echosignalen detektiert und/oder vorhergesagt wird und anschließend die detektierten bzw. vorhergesagten Echosignale unterdrückt oder reduziert werden
**dadurch gekennzeichnet,**
**dass** der Leistungswert des Geräuschpegels N im aktuell benutzten TK-Kanal fortlaufend gemessen und/oder geschätzt wird,
und **dass** in Abhängigkeit vom aktuellen Geräuschpegel N laufend der Grad der aktuell vorzunehmenden Reduktion der Echosignale nach einer vorgegebenen Funktion h(N) automatisch eingestellt wird.

2. Verfahren nach Anspruch 1, **dadurch gekennzeichnet, dass** die Funktion h(N) mit zunehmendem N ansteigt, wobei $h(N \ll 0\ dB_m) = h_{min} = const.$ und $h(N \approx 0\ dB_m) = h_{max} > h_{min}$.

3. Verfahren nach Anspruch 2, **dadurch gekennzeichnet, dass** gilt:

$$-50dB < h_{min} < -20dB,\ vorzugsweise\ -45dB \leq h_{min} \leq -35dB$$

und

$$-20dB < h_{max} < 0\ dB,\ vorzugsweise\ -12dB \leq h_{max} \leq -6dB.$$

4. Verfahren nach einem der vorhergehenden Ansprüche, **dadurch gekennzeichnet, dass** die vorgegebene Funktion h(N) eine Funktion k(S/N) ist, die vom Rauschabstand, also dem Quotienten S/N aus dem Leistungswert des Signalpegels S der zu übertragenden Nutzsignale und dem Leistungswert des Geräuschpegels N abhängt, oder dass die vorgegebene Funktion h(N) eine Funktion k'(N/S) ist, die vom Kehrwert N/S dieses Quotienten, vorzugsweise von N/(N+S) abhängt.

5. Verfahren nach einem der vorhergehenden Ansprüche, **dadurch gekennzeichnet, dass** zusätzlich zur Erkennung und Reduktion von Echosignalen auch Geräuschsignale unterdrückt oder reduziert werden, und dass in Abhängigkeit vom aktuellen Geräuschpegel N laufend der Grad der aktuell vorzunehmenden Reduktion des Geräuschpegels N nach einer vorgegebenen Funktion f(N) oder g(S/N) oder g'(N/S), vorzugsweise g'(N/[N+S]) automatisch eingestellt wird.

6. Verfahren nach Anspruch 5, **dadurch gekennzeichnet, dass** die Funktionen f(N), g(S/N), g'(N/S) oder g'([N/N+S]) bei $N \ll 0\ dB_m$ jeweils mit einem konstanten Maximalwert $f_{max}$ bzw. $g_{max}$ bzw. $g'_{max} \approx 0$ beginnen, im Bereich zwischen $N = -15\ dB_m$ bis $-10\ dB_m$, vorzugsweise bei N bzw. $S/N \approx -12\ dB_m$, auf einen insbesondere einstellbaren Wert, vorzugsweise einen Minimalwert $f_{min}$ bzw. $g_{min}$ bzw. $g'_{min}$ abfallen und anschließend bis $N \approx 0\ dB_m$ auf konstanten Wert $f_0 > f_{min}$ bzw. $g_0 > g_{min}$ bzw. $g'_0 > g'_{min}$ ansteigen, wobei $f_0, g_0, g'_0 < 0$, dass $f_0 \leq -5dB$, $g_0 \geq -10dB$, vorzugsweise $f_0 \leq -6dB$, $g_0 \geq -8dB$, und dass $f_{min} \leq -20\ dB$, $g_{min} \geq -30\ dB$, vorzugsweise $f_{min}, g_{min} \approx -25\ dB$.

7. Verfahren nach einem der Ansprüche 1 bis 6, **dadurch gekennzeichnet, dass** die Funktionen h(N) und/oder f(N) bzw. k(S/N) und/oder g(S/N) bzw. k'(N/S) und/oder g'(N/S) zumindest stückweise, vorzugsweise in allen Teilabschnitten linear mit N bzw. S/N bzw. N/S bzw. N/(N+S) verlaufen.

8. Verfahren nach einem der Ansprüche 1 bis 6, **dadurch gekennzeichnet, dass** die Funktionen h(N) und/oder f(N) bzw. k(S/N) und/oder g(S/N) bzw. k'(N/S) und/oder g'(N/S) aus Polynomen aufgebaut sind und als unsymmetrische Glockenkurven über N bzw. S/N bzw. N/S verlaufen.

9. Verfahren nach einem der vorhergehenden Ansprüche, **dadurch gekennzeichnet, dass** die Funktionen h(N) und/oder f(N) bzw. k(S/N) und/oder g(S/N) bzw. k'(N/S) und/oder g'(N/S) so gewählt werden, dass die Reduktion des Geräuschpegels N gehörrichtig gemäß den psychoakustischen Mittelwerten des menschlichen Gehörspektrums erfolgt.

**10.** Verfahren nach einem der vorhergehenden Ansprüche, **dadurch gekennzeichnet, dass** zur Erkennung des Geräuschpegels N ein Sprach-Pausen-Detektor (SPD) eingesetzt wird, und dass das zu übertragende Signal während der Sprachpausen in seinem Leistungswert gemäß einer Exponentialfunktion abgesenkt wird.